# EUROPÄISCHE PATENTSCHRIFT

(11) **EP 3 607 740 B1**
(45) Veröffentlichungstag und Bekanntmachung des Hinweises auf die Patenterteilung: **07.07.2021**
(21) Anmeldenummer: 17832468.7
(22) Anmeldetag: 11.12.2017
(51) Int. Cl.: H04N 7/18, H04N 5/232, H04N 5/345, H04N 5/347, B60R 1/00

(54) **KAMERAVORRICHTUNG UND VERFAHREN ZUR ERFASSUNG EINES UMGEBUNGSBEREICHS EINES FAHRZEUGS**
CAMERA DEVICE AND METHOD FOR DETECTING AN AREA OUTSIDE A VEHICLE
DISPOSITIF DE CAMÉRA ET PROCÉDÉ DE DÉTECTION D'UNE ZONE A L'EXTÉRIEUR D'UN VÉHICULE

(30) Priorität: 03.04.2017 DE 102017205630
(43) Veröffentlichungstag der Anmeldung: 12.02.2020
(73) Patentinhaber: Conti Temic microelectronic GmbH, 90411 Nürnberg (DE)
(72) Erfinder: BREUER, Karsten, 88179 Oberreute (DE)
(74) Vertreter: Continental Corporation
(86) Internationale Anmeldenummer: PCT/DE2017/200134
(87) Internationale Veröffentlichungsnummer: WO 2018/184608

(56) Entgegenhaltungen:
- DE-A1-102015 208 889
- US-A1- 2005 141 607
- US-A1- 2010 002 071
- US-A1- 2011 285 866
- STEPHAN MATZKA ET AL: "Efficient Resource Allocation for Attentive Automotive Vision Systems", IEEE TRANSACTIONS ON INTELLIGENT TRANSPORTATION SYSTEMS, IEEE, PISCATAWAY, NJ, USA, vol. 13, no. 2, 1 June 2012 (2012-06-01), pages 859-872, XP011445705, ISSN: 1524-9050, DOI: 10.1109/TITS.2011.2182610

## Beschreibung

Die Erfindung betrifft eine Kameravorrichtung und ein Verfahren zur Erfassung eines Umgebungsbereichs eines Fahrzeugs. Ferner betrifft die Erfindung das Fahrzeug mit einer solchen Kameravorrichtung.

Zur Realisierung von Fahrerassistenzvorrichtungen, wie z. B. einer Verkehrszeichenerkennung oder eines Spurhalteassistenten benötigen Kamerasysteme einen horizontalen Bildwinkel von ca. 50 Grad und einen vertikalen Bildwinkel von ca. 30 Grad. Neue Funktionen wie die Querverkehrs- oder die Ampelerkennung beim Halten in vorderster Reihe benötigen jedoch einen deutlich größeren Sichtwinkel, um die sich beim nahen Auffahren im Peripheriebereich des Bildes befindlichen Objekte erfassen zu können. Demgegenüber erfordert beispielsweise hochautomatisiertes Fahren oder ein Spurhalteassistent das Erkennen von Objekten und Fahrbahnstrukturen auch in großer Entfernung, wofür eine entsprechende Auflösung erforderlich ist.

US 2010/002071 A1 offenbart ein Verfahren, bei dem mit einer Weitwinkelkamera ein Bild aufgenommen wird. Bereiche des Bildes können extrahiert und skaliert werden, wobei mit der Skalierung auch eine Änderung der Auflösung einhergeht. Die skalierten Bereiche werden anschließend wieder in das ursprüngliche Bild eingesetzt und übertragen.

Da bildverarbeitende, eingebettete Prozessoren auch mittelfristig die hohen Auflösungen von ca. 8 Megapixel nicht direkt, d.h. in Echtzeit, verarbeiten können, ist eine Reduktion der Auflösung notwendig. Zur Lösung dieses Problems sind Verfahren bekannt, wonach jeweils 4 Pixel zusammengefasst werden (Pixelbinning), sodass ein volles Field of View (Blickfeld) bei halber Auflösung im Bild zur Verfügung steht. Alternativ kann auch jeweils lediglich ein Ausschnitt des Blickfeldes in voller Auflösung eingelesen werden. Dabei kann in jedem Zeitschritt, der sich durch die Bildrate des Imagers ergibt (z.B. 33 frames per second (fps)) immer nur eines dieser Bilder eingelesen werden. Wird also ein größeres horizontales Field of View in hoher Auflösung benötigt (z.B. für eine Kreuzungssituation auf einer Landstraße), so müssen dessen Bestandteile (also etwa linkes Teilbild, rechtes Teilbild) einzeln eingelesen werden, was entsprechend länger dauert. Ein zentrales ungebinntes Bild hingegen bietet für die beispielhaft genannte Situation kein ausreichend großes Field of View, sodass nur das gebinnte Bild in halber Bildrate und mit halber Auflösung genutzt werden kann. Durch beide Methoden steigt die Latenz eines an die Detektion angeschlossenen Systems (z.B. Notbremssystem) an, was sich auf dessen Performance auswirkt.

Eine Aufgabe der vorliegenden Erfindung kann daher darin gesehen werden, eine Kameravorrichtung und ein Verfahren der eingangs genannten Art bereitzustellen, welche ein situationsabhängig notwendiges Field of View mit möglichst geringer Latenz bei gleichzeitiger Nutzung der vollen Auflösung eines Imagers ermöglichen.

Die Aufgabe wird gelöst durch die Gegenstände der unabhängigen Patentansprüche. Vorteilhafte Ausführungsformen sind Gegenstand der unabhängigen Ansprüche, der folgenden Beschreibung sowie der Figuren.

Gemäß einem ersten Aspekt der Erfindung wird eine Kameravorrichtung zur Erfassung eines Umgebungsbereichs eines Fahrzeugs bereitgestellt.

Die Kameravorrichtung umfasst eine Optronik, umfassend eine Weitwinkeloptik und einen hochauflösenden Bildaufnahmesensor, insbesondere bestehend aus einer Weitwinkeloptik und einem hochauflösenden Bildaufnahmesensor, sowie eine die Optronik steuernde Kontrolleinheit, und welche ausgebildet ist, eine Bildfolge einer äußeren Umgebung des Fahrzeugs aufzunehmen. Die Bildfolge der äußeren Umgebung des Fahrzeugs umfasst dabei eine Vielzahl Bilder, welche zeitlich aufeinanderfolgend aufgenommen werden. Insbesondere umfasst die Bildfolge das im Folgenden näher beschriebenen erste Bild, zweite Bild, dritte Bild und vierte Bild. Bei dem Umgebungsbereich handelt es sich beispielsweise um einen in Fahrtrichtung des eigenen Fahrzeugs vorausliegenden, seitlichen und/oder rückwärtigen Umgebungsbereich.

Vorzugsweise ist die Weitwinkeloptik mit einem horizontalen und/oder vertikalen Bildwinkel von z. B. mindestens + / - 50 Grad, insbesondere von mindestens + / - 70 Grad und/oder von höchstens von + / - 80 Grad zur optischen Achse ausgebildet. Mittels der Weitwinkeloptik ist beispielsweise ein Peripherieumfeld wie z. B. ein Kreuzungsbereich zur frühzeitigen Objektauswertung von kreuzenden Verkehrsteilnehmern erfassbar. Die Bildwinkel bestimmen das Sichtfeld (Field of view, FOV) der Kameravorrichtung.

Weiterhin umfasst die Optronik einen hochauflösenden Bildaufnahmesensor. Mittels der vom hochauflösenden Bildaufnahmesensor gelieferten Bilder wird insbesondere eine Objekterkennung wie z. B. die Detektion von Verkehrszeichen oder Fahrspuren im Fernbereich, somit insbesondere in einem Entfernungsbereich zum eigenen Fahrzeug von mindestens 50 Metern ermöglicht. Unter dem hochauflösenden Bildaufnahmesensor ist insbesondere ein Bildaufnahmesensor mit einer Pixelanzahl von mehreren Megapixeln, beispielsweise von mindestens fünf Megapixeln, vorzugsweise von mindestens sieben Megapixeln, im Speziellen von mindestens zehn Megapixeln zu verstehen. Vorzugsweise weist der Bildaufnahmesensor eine homogene Pixel/cm-Auflösung auf.

Die Optronik und/oder ein daran angeschlossener, bildverarbeitender Prozessor sind dazu eingerichtet, eine Auflösung in einem ersten Bild der Bildfolge zu reduzieren und das erste Bild mit der reduzierten Auflösung auszugeben, wobei die Auflösung in dem gesamten ersten Bild reduziert wird.

Weiterhin sind die Optronik und die sie steuernde Kontrolleinheit dazu eingerichtet, in einem nachfolgend aufgenommenen zweiten Bild der Bildfolge einen ersten Teilbereich auszuwählen, der den zentralen Bildbereich und einen ersten seitlichen Außenbereich umfasst, und lediglich bzw. ausschließlich diesen ersten Teilbereich auszugeben, wobei die Auflösung des ausgegebenen ersten Teilbereichs nicht reduziert wird.

Ferner sind die Optronik und/oder der bildverarbeitende Prozessor dazu eingerichtet, eine Auflösung in einem dritten Bild der Bildfolge zu reduzieren und das dritte Bild mit der reduzierten Auflösung auszugeben, wobei die Auflösung in dem gesamten dritten Bild reduziert wird.

Außerdem sind die Optronik und die sie steuernde Kontrolleinheit dazu eingerichtet, in einem nachfolgend aufgenommenen vierten Bild der Bildfolge einen zweiten Teilbereich auszuwählen, der den zentralen Bereich und einen zweiten seitlichen Außenbereich umfasst, und lediglich bzw. ausschließlich diesen zweiten Teilbereich auszugeben, wobei die Auflösung des ausgegebenen zweiten Teilbereichs nicht reduziert wird.

Der zentrale Bereich weist eine Breite und eine Höhe auf, ist bevorzugt rechteckig oder quadratisch und erstreckt sich symmetrisch um einen Mittelpunkt des betreffenden Bilds der Bildfolge (zweites Bild und viertes Bild) . Die Form und Größe des zentralen Bereichs kann für das zweite Bild und für das vierte Bild bevorzugt gleich, alternativ jedoch auch unterschiedlich festgelegt werden.

Der erste seitliche Außenbereich kann beispielsweise ein linker oder ein rechter seitlicher Außenbereich des zweiten Bilds sein, wohingegen der zweite seitliche Außenbereich beispielsweise ein rechter oder ein linker - d.h. komplementärer - seitlicher Außenbereich des vierten Bilds sein kann. Insbesondere können die nicht in ihrer Auflösung reduzierten, insbesondere ungebinnten Bildbereiche, immer die halbe Höhe und halbe Breite (bei den beiden Randbildern in Summe) der in ihrer Auflösung reduzierten, insbesondere gebinnten Bildbereiche haben. Dies ist jedoch keinesfalls zwingend der Fall. Die hochaufgelösten Bildstreifen können mit hoher Wahrscheinlichkeit auch ein anderes Verhältnis als 1:2 aufweisen. Lediglich die Auflösung hat auf jeden Fall das Verhältnis 2:1 (bei einem Binning von je 4 Pixeln).

Der erste seitliche Außenbereich schließt sich seitlich auf der einen Seite des zentralen Bereichs übergangslos an den zentralen Bereich an, und der zweite seitliche Außenbereich schließt sich auf der anderen Seite des zentralen Bereichs übergangslos an den zentralen Bereich an. Es gibt somit keinen separaten zentralen Bereich. Die Bildstreifen umfassen zwar jeweils den zentralen Bereich, dieser ist jedoch ein integraler Bestandteil des jeweiligen hochaufgelösten Streifens. Dabei erstrecken sich der erste seitliche Außenbereich und der zweite seitliche Außenbereich bevorzugt bis zu einem der seitlichen Ränder des betreffenden Bilds der Bildfolge, wodurch in dem zweiten Bild und in dem vierten Bild in horizontaler Richtung ein sehr breites Field of View in voller Auflösung ausgegeben werden kann.

Bevorzugt ist vorgesehen, dass die vorstehend im Zusammenhang mit dem ersten bis vierten Bild beschriebenen Operationen mehrmals hintereinander, besonders bevorzugt kontinuierlich nacheinander durchgeführt werden.

Die für Kreuzungssituationen relevanten Außenbereiche des Bildes können gemäß der vorliegenden Erfindung stets mit 75 % der vollen Framerate erfasst werden (z.B. mit 25 fps bei 33 fps voller Framerate) . Dabei werden die relevanten Außenbereiche im Wechsel auch hochaufgelöst erfasst. Der Zentralbereich wird mit der vollen Framerate und im Wechsel auch hochaufgelöst erfasst. Dadurch wird ermöglicht, dass kritische Bildinhalte mit ausreichend hoher Framerate erfasst werden und die Reichweite der Detektion maximal gehalten werden kann, ohne dabei den bildverarbeitenden Prozessor zu überfordern. Dadurch kann die Latenz für aktive Sicherheitssysteme reduziert werden.

Insbesondere weisen hochaufgelöste Bildbereiche, in denen keine Reduzierung der Auflösung erfolgt, eine höhere Auflösung als die auflösungsreduzierten Bilder auf. Vorzugsweise beträgt die Auflösung in den hochaufgelösten Bildbereichen im horizontalen und/oder vertikalen Bildwinkel mindestens 40 Pixel pro Grad, im Speziellen mindestens 50 Pixel pro Grad. Beispielsweise können die hochaufgelösten Bildbereiche mit der durch die Optronik höchsten verfügbaren Auflösung ausgegeben werden.

Beispielsweise weisen auflösungsreduzierte Bildbereiche, in denen die vorstehend beschriebene Reduzierung der Auflösung erfolgt, jeweils zumindest bereichsweise eine Auflösung im horizontalen und/oder vertikalen Bildwinkel von höchstens 30 Pixeln pro Grad, im Speziellen von höchstens 20 Pixeln pro Grad auf. Vorzugsweise weisen die auflösungsreduzierten Bildbereiche zumindest annähernd die gleiche Pixelanzahl und/oder eine einheitliche, im Speziellen gleichmäßig verteilte Pixelgrö-ßenverteilung auf. Es sind weiterhin Optiken mit nicht-linearer Verzerrungscharakteristik für den Einsatz vorgesehen. Daher können zwar die Pixelgrößen auf dem Imager gleichmäßig sein, aber der durch einen Pixel abgebildete Bildbereich verändert sich in seiner Größe über den Winkel (i.d.R. nimmt die Auflösung in Px/° zu den Bildaußenseiten hin ab).

Weiterhin kann gemäß einer bevorzugten Ausprägung ein oberer Außenbereich in dem zweiten Bild und/oder dem vierten Bild nicht ausgewählt und nicht ausgegeben werden. Der obere Außenbereich erstreckt sich dabei in dem zweiten und/oder dem vierten Bild in horizontaler Richtung oberhalb des zentralen Bereichs und bevorzugt über die gesamte Breite des betreffenden Bilds. Somit werden für das System sozusagen "uninteressante" Bereiche (wie etwa ein Bildbereich, welcher einen Himmel zeigt) für die hochaufgelöste Erfassung ausgespart, um eine benötigte Rechenleistung sinnvoll zu begrenzen.

In ähnlicher Weise kann gemäß einer weiteren bevorzugten Ausprägung ein unterer Außenbereich in dem zweiten Bild und/oder dem vierten Bild nicht ausgewählt und nicht ausgegeben werden. Der untere Außenbereich erstreckt sich dabei in dem zweiten und/oder dem vierten Bild in horizontaler Richtung unterhalb des zentralen Bereichs und bevorzugt über die gesamte Breite des betreffenden Bilds. Somit werden für das System sozusagen "uninteressante" Bereiche für die hochaufgelöste Erfassung ausgespart, um eine benötigte Rechenleistung sinnvoll zu begrenzen.

Der obere Außenbereich und der untere Außenbereich können streifenförmige Bildbereiche mit reduzierter Auflösung sein, wobei diese Bildbereiche Regionen in der äußeren Umgebung des Fahrzeugs repräsentieren, für welche keine hohen Detektionsreichweiten benötigt werden, da die dort befindlichen Objekte (z.B. Überkopf-Beschilderung) auch mit der reduzierten Auflösung ausreichend wahrgenommen werden können. Weiterhin können diese Bereiche beispielsweise für die Beurteilung einer Kreuzungssituation weniger kritisch sein als durch den zentralen Bereich und die seitlichen Außenbereiche repräsentierte Regionen in der äußeren Umgebung des Fahrzeugs. Das Nicht-Auswählen und die Nicht-Ausgabe dieser Bildbereiche kann somit eine verringerte Rechenleistung ermöglichen, wobei insbesondere die Latenz für aktive Sicherheitssysteme weiterhin gering gehalten werden kann.

Gemäß einer bevorzugten Ausführungsform ist der Bildaufnahmesensor oder eine Bildaufbereitungseinrichtung dazu eingerichtet, die Auflösung in dem ersten und dritten Bild durch Pixelbinning zu reduzieren. Die Bildaufbereitungseinrichtung kann ein Bestandteil der Optronik sein. Allerdings ist die Bildaufbereitungseinrichtung insbesondere dann kein Bestandteil der Optronik, wenn sie nicht Teil des Bildaufnahmesensors ist. In diesem Fall gehört sie zu der Prozessoreinheit, die mit der Optronik verbunden ist. Dabei kann der Bildaufnahmesensor ausgebildet sein, die Bildfolge mit insbesondere ausschließlich hochaufgelösten Bildern aufzunehmen. Insbesondere können beim Pixelbinning benachbarte Pixel z.B. innerhalb einer Zeile und/oder einer Spalte oder in einem z.B. rechteckigen Teilbereich des jeweils aufgenommenen Bildes zusammengefasst und einem neuen Pixel zugeordnet werden. Die resultierende Pixelmatrix des auflösungsreduzierten Bildes weist somit insbesondere eine geringere Auflösung als das zugehörige aufgenommene Bild auf.

Weiterhin umfasst die Kameravorrichtung vorzugsweise zumindest eine Detektionsfunktion wie beispielsweise zur Erfassung und Klassifizierung von anderen Verkehrsteilnehmern (Fahrzeuge, Fußgänger) oder Wahrnehmen von Spurmarkierungen.

Weiterhin umfasst die Kameravorrichtung vorzugsweise mindestens eine Fahrerassistenzvorrichtung wie z. B. einen Spurhalte- oder Abbiegeassistenzvorrichtung oder ist mit dieser verbindbar. Die Fahrerassistenzvorrichtung ist insbesondere ausgebildet, in Abhängigkeit des mindestens einen ausgewerteten Zielobjekts mindestens eine passive und/oder aktive Fahrerassistenzfunktion wie z. B. eine Abstandswarnung, eine Notbremsung oder ein autonomes Ausweichmanöver durchzuführen.

Gemäß einem zweiten Aspekt der Erfindung wird ein Fahrzeug bereitgestellt, welches eine Kameravorrichtung gemäß dem ersten Aspekt der Erfindung umfasst. Bei dem Fahrzeug handelt es sich insbesondere um ein Kraftfahrzeug, z.B. ein PKW, ein Lkw, ein Kommunalfahrzeug oder ein Bus.

Gemäß einem dritten Aspekt der Erfindung wird ein Verfahren zur Erfassung eines Umgebungsbereichs eines Fahrzeugs bereitgestellt. Das Verfahren umfasst ein Bereitstellen eines Fahrzeugs gemäß dem zweiten Aspekt der Erfindung. Weiterhin erfolgt ein Aufnehmen einer Bildfolge einer äußeren Umgebung des Fahrzeugs.

In einem ersten Bild der Bildfolge wird eine Auflösung reduziert und das erste Bild anschließend mit der reduzierten Auflösung ausgegeben, wobei die Auflösung in dem gesamten ersten Bild reduziert wird. In einem nachfolgend aufgenommenen zweiten Bild der Bildfolge wird weiterhin ein zentraler Bereich und ein erster seitlicher Außenbereich ausgewählt und ausschließlich ausgegeben, wobei die Auflösung des zentralen Bereichs und des ersten seitlichen Außenbereichs nicht reduziert wird.

In einem dritten Bild der Bildfolge wird ferner eine Auflösung reduziert und das dritte Bild anschließend mit der reduzierten Auflösung ausgegeben, wobei die Auflösung in dem gesamten dritten Bild reduziert wird.

Außerdem wird in einem nachfolgend aufgenommenen vierten Bild der Bildfolge ein zentraler Bereich und ein zweiter seitlicher Außenbereich ausgewählt und ausschließlich ausgegeben, wobei die Auflösung des zentralen Bereichs und des zweiten seitlichen Außenbereichs nicht reduziert wird.

Gemäß einer Ausführungsform des erfindungsgemäßen Verfahrens ist vorteilhaft vorgesehen, dass ein oberer und/oder ein unterer Außenbereich des zweiten und/oder des vierten Bilds nicht ausgewählt und nicht ausgegeben wird.

Weiterhin ist bevorzugt vorgesehen, dass die Auflösung in dem ersten Bild und in dem dritten Bild durch Pixelbinning mittels des Bildaufnahmesensors oder mittels einer Bildaufbereitungseinrichtung reduziert wird. Die Bildaufbereitungseinrichtung kann ein Bestandteil der Optronik sein. Allerdings ist die Bildaufbereitungseinrichtung insbesondere dann kein Bestandteil der Optronik, wenn sie nicht Teil des Bildaufnahmesensors ist. In diesem Fall gehört sie zu der Prozessoreinheit, die mit der Optronik verbunden ist.

Gemäß einem vierten Aspekt der Erfindung wird ein Programmelement bereitgestellt, das, wenn es auf einem Prozessor ausgeführt wird, den Prozessor anleitet, die Verfahrensschritte des Verfahrens gemäß dem dritten Aspekt der Erfindung durchzuführen, wobei alle Verfahrensschritte durchgeführt werden, welche nach dem Bereitstellen des Fahrzeugs mit der Kameravorrichtung vorgesehen sind.

Gemäß einem fünften Aspekt der Erfindung wird ein computerlesbares Medium bereitgestellt, auf dem ein Programmelement gespeichert ist, das, wenn es auf einem Prozessor ausgeführt wird, den Prozessor anleitet, die Verfahrensschritte des Verfahrens gemäß dem dritten Aspekt der Erfindung durchzuführen, wobei alle Verfahrensschritte durchgeführt werden, welche nach dem Bereitstellen des Fahrzeugs mit der Kameravorrichtung vorgesehen sind.

Im Folgenden werden Ausführungsbeispiele der Erfindung anhand der schematischen Zeichnung näher erläutert. Hierbei zeigt
- Fig. 1: eine Seitenansicht eines Fahrzeugs mit einem Ausführungsbeispiel einer erfindungsgemäßen Kameravorrichtung und
- Fig. 2: eine durch die Kameravorrichtung nach Fig. 1 generierte Bildfolge.

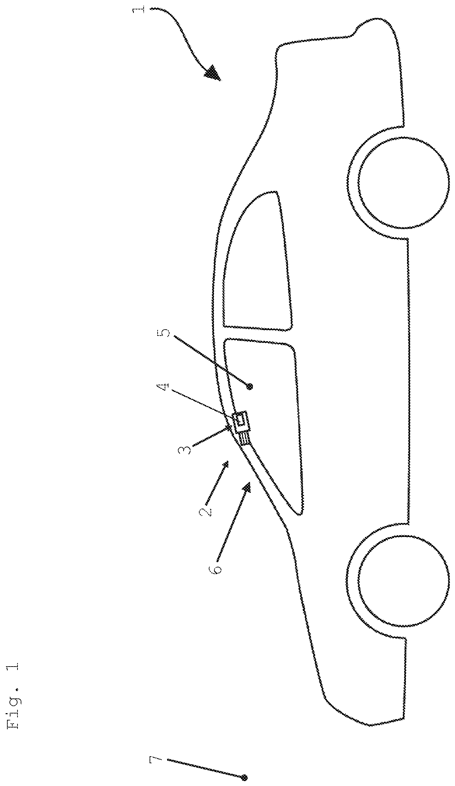

Fig.1 zeigt ein Fahrzeug 1 in Form eines Automobils. Das Fahrzeug 1 umfasst eine Kameravorrichtung 2 zur Erfassung eines Umgebungsbereichs 7 des Fahrzeugs 1, wobei die Kameravorrichtung 2 wiederum eine Optronik 3 mit einer Weitwinkeloptik und mit einem hochauflösenden Bildaufnahmesensor umfasst. Weiterhin kann die Optronik 3 eine Bildaufbereitungseinrichtung 4 umfassen. Wenn das weiter unten beschriebene Binning von einem Imager durchgeführt wird, ist dies dort in Hardware umgesetzt und kann nur parametriert werden. Eine Software-Implementierung ist dann nicht in der Optronik 3 möglich, sondern nur in einer mit dem Imager verbundenen Prozessoreinheit. Die Optronik 3 umfasst insbesondere nur die Optik und den Imager. Programme, die auf der Prozessoreinheit ausgeführt werden, können nicht auf der Optronik abgelegt sein. Dies ist der eigentlichen Prozessoreinheit mit daran angeschlossenen Speicherbausteinen vorbehalten.

Die Kameravorrichtung 2 ist in einem Innenraum 5 des Fahrzeugs 1 angeordnet, und zwar insbesondere in einem Bereich hinter einer Windschutzscheibe 6 des Fahrzeugs 1. Dies ist jedoch rein beispielhaft. Ebenfalls kann beispielsweise auch eine Montage an einer Heckscheibe des Fahrzeugs 1 mit Blickrichtung nach hinten vorgesehen sein. Mittels der Optronik 3 können durch die Windschutzscheibe 6 mehrere Außenaufnahmen bzw. Bilder von einer äußeren Umgebung 7 des Fahrzeugs 1 aufgenommen werden, wobei die mehreren Bilder zeitlich aufeinanderfolgend gemacht werden und eine Bildfolge der äußeren Umgebung 7 des Fahrzeugs 1 bilden.

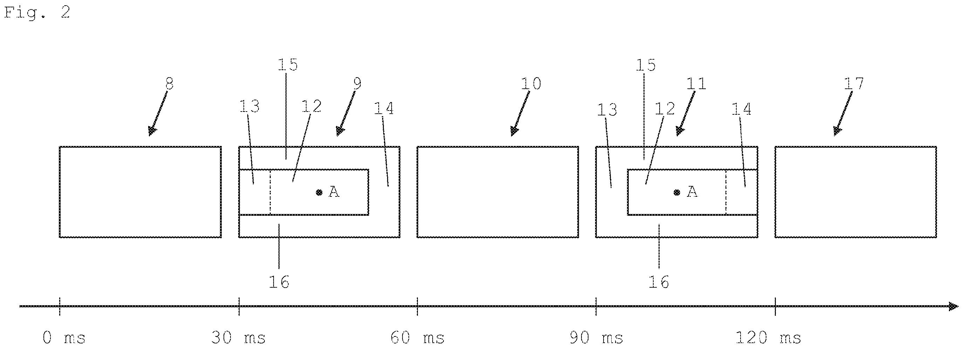

Fig. 2 zeigt ein erstes Bild 8, ein zweites Bild 9, ein drittes Bild 10 und ein viertes Bild 11. Diese vier Bilder 8 bis 11 wurden mittels der Optronik 3 des Kamerasystems 2 aufgenommen. Die Inhalte der Bilder 8 bis 11 sind zu Vereinfachungszwecken nicht dargestellt.

Das erste Bild 8 wurde zu einem ersten Zeitpunkt (0 ms) aufgenommen, das zweite Bild 9 wurde nachfolgend zu einem zweiten Zeitpunkt (30 ms) aufgenommen, das dritte Bild 10 wurde nachfolgend zu einem Zeitpunkt (60 ms) aufgenommen, und das vierte Bild 11 wurde nachfolgend zu einem vierten Zeitpunkt (90 ms) aufgenommen. Somit ist in Zeitintervallen von jeweils 30 ms Länge jeweils eines der Bilder 8 bis 11 aufgenommen worden. Grundsätzlich sind natürlich auch andere Zyklen möglich - die 30 ms gelten nur für das konkrete Beispiel. Durch die Länge des Zeitintervalls ergibt sich die Framerate, in dem gezeigten Ausführungsbeispiel 33 fps (1 Sekunde geteilt durch 33 Bilder pro Sekunde ergibt ein Zeitintervall von ca. 30 ms zwischen zwei aufeinanderfolgenden Bildern).

Mittels der Optronik 3 oder der damit verbundenen Bildaufbereitungseinrichtung 4 kann eine Auflösung in dem ersten Bild 8 reduziert und das erste Bild 8 mit der reduzierten Auflösung ausgegeben werden, wobei die Auflösung in dem gesamten ersten Bild 8 reduziert wird. Somit wird das gesamte erste Bild 8 mit vollem Erfassungsbereich (Field of View) ausgegeben.

Weiterhin können mittels der Optronik 3 ein zentraler Bereich 12 des zweiten Bilds 9 und ein linker Außenbereich 13 des zweiten Bilds 9 ausgewählt und ausschließlich ausgegeben werden. Ein rechter Außenbereich 14, ein obere Außenbereich 15 und ein unterer Außenbereich 16 des zweiten Bilds 9 hingegen werden weder ausgewählt noch ausgegeben.

Der zentrale Bereich 12 erstreckt sich symmetrisch um einen Mittelpunkt A des zweiten Bilds 9 bzw. des vollen Erfassungsbereichs (Field of View) . Die Breite des zentralen Bereichs 12 kann beispielsweise einem horizontalen Bildwinkel von 32° entsprechen (jeweils 16° rechts und links des Mittelpunkts A; "+-16°"). Zusammen können der zentrale Bereich 12 und der linke Außenbereich 13 eine Breite aufweisen, welche einem horizontalen Bildwinkel von mehr als 35° entspricht (mehr als 35° links des Mittelpunkts A "←35°" zuzüglich der möglichen 16° rechts des Mittelpunktes A).

Ferner kann mittels der Optronik 3 oder der damit verbundenen Bildaufbereitungseinrichtung 4 eine Auflösung in dem dritten Bild 10 reduziert und das dritte Bild 10 mit der reduzierten Auflösung ausgegeben werden, wobei die Auflösung in dem gesamten dritten Bild 10 reduziert wird. Somit wird das gesamte dritte Bild 11 mit vollem Erfassungsbereich (Field of View) ausgegeben.

Außerdem kann mittels der Optronik 3 in dem vierten Bild 11 ein zentraler Bereich 12 und ein rechter seitlicher Außenbereich 14 ausgewählt und ausschließlich ausgegeben werden. Dahingegen werden ein linker Außenbereich 13, ein oberer Außenbereich 15 und ein unterer Außenbereich 16 des vierten Bilds 11 weder ausgewählt noch ausgegeben.

Die Breite des zentralen Bereichs 12 kann beispielsweise einem horizontalen Bildwinkel von 32° entsprechen (jeweils 16° rechts und links des Mittelpunkts A; "+-16°"). Zusammen können der zentrale Bereich 12 und der rechte Außenbereich 14 eine Breite aufweisen, welche einem horizontalen Bildwinkel von mehr als 35° entspricht (mehr als 35° rechts des Mittelpunkts A ">+35°" zuzüglich der möglichen 16° links des Mittelpunktes A).

Der zentrale Bereich 12, der linke Außenbereich 13, der rechte Außenbereich 14, der obere Außenbereich 15 und der untere Außenbereich 16 des vierten Bilds 11 sind in dem durch Fig. 2 gezeigten Ausführungsbeispiel identisch mit den entsprechenden Bereichen 12 bis 16 in dem zweiten Bild 9.

Die vorstehend beschriebenen Reduzierungen der Auflösungen in den Bildern 8 und 11 können durch Pixelbinning erreicht werden, wobei dazu insbesondere der Bildaufnahmesensor oder die Bildaufbereitungseinrichtung 4 genutzt werden können.

In Fig. 2 ist noch ein von der Optronik 3 aufgenommenes fünftes Bild 17 dargestellt, dass nach 120 ms aufgenommen worden ist. Das fünfte Bild 17 soll verdeutlichen, dass der vorstehend genannte Zyklus aus Aufnahme von vier Bildern 8 bis 11 und (teilweiser) Reduzierung der Auflösung in den Bildern 8 bis 11 mit der Aufnahme eines weiteren Bild 17 erneut startet.

## Patentansprüche

1. Kameravorrichtung (2) zur Erfassung eines Umgebungsbereichs (7) eines Fahrzeugs (1), die Kameravorrichtung (2) umfassend eine Optronik (3), bestehend aus einer Weitwinkeloptik und einem hochauflösenden Bildaufnahmesensor, sowie eine die Optronik steuernde Kontrolleinheit, und welche ausgebildet ist, eine Bildfolge einer äußeren Umgebung (7) des Fahrzeugs (1) aufzunehmen,
- wobei die Optronik (3) dazu eingerichtet ist, eine Auflösung in einem ersten Bild (8) der Bildfolge zu reduzieren und das erste Bild (8) mit der reduzierten Auflösung auszugeben, wobei die Auflösung in dem gesamten ersten Bild (8) reduziert wird,
- wobei die Optronik (3) und die sie steuernde Kontrolleinheit dazu eingerichtet sind, in einem nachfolgend aufgenommenen zweiten Bild (9) der Bildfolge einen ersten Teilbereich auszuwählen, der den zentralen Bildbereich (12) und einen ersten seitlichen Außenbereich (13) umfasst, und ausschließlich diesen ersten Teilbereich auszugeben, wobei die Auflösung des ausgegebenen ersten Teilbereichs nicht reduziert wird,
- wobei die Optronik (3) dazu eingerichtet ist, eine Auflösung in einem dritten Bild (10) der Bildfolge zu reduzieren und das dritte Bild (10) mit der reduzierten Auflösung auszugeben, wobei die Auflösung in dem gesamten dritten Bild (10) reduziert wird, und
- die Optronik (3) und die sie steuernde Kontrolleinheit dazu eingerichtet sind, in einem nachfolgend aufgenommenen vierten Bild (11) der Bildfolge einen zweiten Teilbereich auszuwählen, der den zentralen Bereich (12) und einen zweiten seitlichen Außenbereich (14) umfasst, und ausschließlich diesen zweiten Teilbereich auszugeben, wobei die Auflösung des ausgegebenen zweiten Teilbereichs nicht reduziert wird.

2. Kameravorrichtung (2) nach Anspruch 1, wobei ein oberer Außenbereich (15) in dem zweiten Bild (9) und/oder dem vierten Bild (11) nicht ausgewählt und nicht ausgegeben wird.

3. Kameravorrichtung (2) nach Anspruch 1 oder 2, wobei ein unterer Außenbereich (16) in dem zweiten Bild (9) und/oder dem vierten Bild (11) nicht ausgewählt und nicht ausgegeben wird.

4. Kameravorrichtung (2) nach einem der vorstehenden Ansprüche, wobei der Bildaufnahmesensor der Optronik (3) oder eine Bildaufbereitungseinrichtung (4) dazu eingerichtet ist, die Auflösung in dem ersten Bild (8) und in dem dritten Bild (11) durch Pixelbinning zu reduzieren.

5. Fahrzeug (1) umfassend eine Kameravorrichtung (2) nach einem der vorstehenden Ansprüche.

6. Verfahren zur Erfassung eines Umgebungsbereichs (7) eines Fahrzeugs (1), das Verfahren umfassend die Schritte:
- Bereitstellen eines Fahrzeugs (1) nach Anspruch 5,
- Aufnehmen einer Bildfolge einer äußeren Umgebung (7) des Fahrzeugs (1),
- Reduzieren einer Auflösung in einem ersten Bild (8) der Bildfolge und Ausgabe des ersten Bilds (8) mit der reduzierten Auflösung, wobei die Auflösung in dem gesamten ersten Bild (8) reduziert wird,
- Auswählen und ausschließliches Ausgeben eines zentralen Bereichs (12) und eines ersten seitlichen Außenbereichs (13) in einem nachfolgend aufgenommenen zweiten Bild (9) der Bildfolge, wobei die Auflösung des zentralen Bereichs (12) und des ersten seitlichen Außenbereichs (13) nicht reduziert wird,
- Reduzieren einer Auflösung in einem dritten Bild (10) der Bildfolge und Ausgeben des dritten Bilds (10) mit der reduzierten Auflösung, wobei die Auflösung in dem gesamten dritten Bild (10) reduziert wird, und
- Auswählen und ausschließliches Ausgeben eines zentralen Bereichs (12) und eines zweiten seitlichen Außenbereichs (14) in einem nachfolgend aufgenommenen vierten Bild (11) der Bildfolge, wobei die Auflösung des zentralen Bereichs (12) und des zweiten seitlichen Außenbereichs (14) nicht reduziert wird.

7. Verfahren nach Anspruch 6, wobei ein oberer und/oder ein unterer Außenbereich (15, 16) des zweiten und/oder des vierten Bilds (9, 11) nicht ausgewählt und nicht ausgegeben wird.

8. Verfahren nach einem der Ansprüche 6 oder 7, wobei die Auflösung in dem ersten Bild (8) und in dem dritten Bild (11) durch Pixelbinning mittels des Bildaufnahmesensors der Optronik (3) oder mittels einer Bildaufbereitungseinrichtung (4) reduziert wird.

9. Programmelement, das, wenn es auf einem Prozessor ausgeführt wird, den Prozessor anleitet, die Verfahrensschritte eines Verfahrens gemäß einem der Ansprüche 6 bis 8 durchzuführen.

10. Computerlesbares Medium, auf dem ein Programmelement gespeichert ist, das, wenn es auf einem Prozessor ausgeführt wird, den Prozessor anleitet, die Verfahrensschritte eines Verfahrens gemäß einem der Ansprüche 6 bis 8 durchzuführen.

## Claims

1. Camera apparatus (2) for capturing a surrounding region (7) of a vehicle (1), with the camera apparatus (2) comprising an opto-electronic unit (3), consisting of a wide-angle optical unit and a high-resolution image recording sensor, and also comprising a control unit controlling the opto-electronic unit, and which is embodied to record an image sequence of an outer surrounding area (7) of the vehicle (1),
- wherein the opto-electronic unit (3) is configured to reduce a resolution in a first image (8) of the image sequence and to output the first image (8) with the reduced resolution, wherein the resolution is reduced in the entire first image (8),
- wherein the opto-electronic unit (3) and the control unit controlling it are configured to select, in a subsequently recorded second image (9) of the image sequence, a first partial region comprising the central image region (12) and a first lateral outer region (13), and to output exclusively this first partial region, wherein the resolution of the output first partial region is not reduced,
- wherein the opto-electronic unit (3) is configured to reduce a resolution in a third image (10) of the image sequence and to output the third image (10) with the reduced resolution, wherein the resolution is reduced in the entire third image (10), and
- the opto-electronic unit (3) and the control unit controlling it are configured to select, in a subsequently recorded fourth image (11) of the image sequence, a second partial region comprising the central region (12) and a second lateral outer region (14), and to output exclusively this second partial region, wherein the resolution of the output second partial region is not reduced.

2. Camera apparatus (2) according to Claim 1, wherein an upper outer region (15) in the second image (9) and/or the fourth image (11) is not selected and is not output.

3. Camera apparatus (2) according to Claim 1 or 2, wherein a lower outer region (16) in the second image (9) and/or the fourth image (11) is not selected and is not output.

4. Camera apparatus (2) according to one of the preceding claims, wherein the image recording sensor of the opto-electronic unit (3) or an image editing device (4) is configured to reduce the resolution in the first image (8) and in the third image (11) by way of pixel binning.

5. Vehicle (1) comprising a camera apparatus (2) according to one of the preceding claims.

6. Method for capturing a surrounding region (7) of a vehicle (1), with the method comprising the steps of:
- providing a vehicle (1) according to Claim 5,
- recording an image sequence of an outer surrounding area (7) of the vehicle (1),
- reducing a resolution in a first image (8) of the image sequence and outputting the first image (8) with the reduced resolution, wherein the resolution is reduced in the entire first image (8),
- selecting and exclusively outputting a central region (12) and a first lateral outer region (13) in a subsequently recorded second image (9) of the image sequence, wherein the resolution of the central region (12) and of the first lateral outer region (13) is not reduced,
- reducing a resolution in a third image (10) of the image sequence and outputting the third image (10) with the reduced resolution, wherein the resolution is reduced in the entire third image (10), and
- selecting and exclusively outputting a central region (12) and a second lateral outer region (14) in a subsequently recorded fourth image (11) of the image sequence, wherein the resolution of the central region (12) and of the second lateral outer region (14) is not reduced.

7. Method according to Claim 6, wherein an upper and/or a lower outer region (15, 16) of the second and/or the fourth image (9, 11) is not selected and is not output.

8. Method according to either of Claims 6 and 7, wherein the resolution in the first image (8) and in the third image (11) is reduced by way of pixel binning by means of the image recording sensor of the opto-electronic unit (3) or by means of an image editing device (4) .

9. Program element, which, when it is executed on a processor, instructs the processor to carry out the method steps of a method according to one of Claims 6 to 8.

10. Computer-readable medium, on which a program element is stored, which, when it is executed on a processor, instructs the processor to carry out the method steps of a method according to one of Claims 6 to 8.

## Revendications

1. Arrangement de caméra (2) destiné à acquérir une zone environnante (7) d'un véhicule (1), l'arrangement de caméra (2) comprenant une optronique (3), composée d'une optique à grand angle et d'un capteur d'enregistrement d'images à haute résolution, ainsi qu'une unité de contrôle qui commande l'optronique et qui est configurée pour enregistrer une séquence d'images d'un environnement extérieur (7) du véhicule (1),
- l'optronique (3) étant conçue pour réduire une résolution dans une première image (8) de la séquence d'images et pour délivrer en sortie la première image (8) avec la résolution réduite, la résolution étant réduite dans la totalité de la première image (8),
- l'optronique (3) et l'unité de contrôle commandante étant conçues pour sélectionner, dans une deuxième image (9) enregistrée par la suite de la séquence d'images, une première zone partielle qui comprend la zone d'image centrale (12) et une première zone extérieure latérale (13), et délivrer en sortie uniquement cette première zone partielle, la résolution de la première zone partielle délivrée en sortie n'étant pas réduite,
- l'optronique (3) étant conçue pour réduire une résolution dans une troisième image (10) de la séquence d'images et délivrer en sortie la troisième image (10) avec la résolution réduite, la résolution étant réduite dans la totalité de la troisième image (10), et
- l'optronique (3) et l'unité de contrôle commandante étant conçues pour sélectionner, dans une quatrième image (11) enregistrée par la suite de la séquence d'images, une deuxième zone partielle qui comprend la zone d'image centrale (12) et une deuxième zone extérieure latérale (14), et délivrer en sortie uniquement cette deuxième zone partielle, la résolution de la deuxième zone partielle délivrée en sortie n'étant pas réduite.

2. Arrangement de caméra (2) selon la revendication 1, une zone extérieure supérieure (15) dans la deuxième image (9) et/ou la quatrième image (11) n'étant pas sélectionnée et pas délivrée en sortie.

3. Arrangement de caméra (2) selon la revendication 1 ou 2, une zone extérieure inférieure (16) dans la deuxième image (9) et/ou la quatrième image (11) n'étant pas sélectionnée et pas délivrée en sortie.

4. Arrangement de caméra (2) selon l'une des revendications précédentes, le capteur d'enregistrement d'images de l'optronique (3) ou un dispositif de conditionnement d'images (4) étant conçu pour réduire la résolution dans la première image (8) et dans la troisième image (11) par regroupement des pixels par classe.

5. Véhicule (1), comprenant un arrangement de caméra (2) selon l'une des revendications précédentes.

6. Procédé d'acquisition d'une zone environnante (7) d'un véhicule (1), le procédé comprenant les étapes suivantes :
- fourniture d'un véhicule (1) selon la revendication 5,
- enregistrement d'une séquence d'images d'un environnement extérieur (7) du véhicule (1),
- réduction d'une résolution dans une première image (8) de la séquence d'images et délivrance en sortie de la première image (8) avec la résolution réduite, la résolution étant réduite dans la totalité de la première image (8),
- sélection et ensuite délivrance en sortie d'une zone centrale (12) et d'une première zone extérieure latérale (13) dans une deuxième image (9) enregistrée par la suite de la séquence d'images, la résolution de la zone centrale (12) et de la première zone extérieure latérale (13) n'étant pas réduite,
- réduction d'une résolution dans une troisième image (10) de la séquence d'images et délivrance en sortie de la troisième image (10) avec la résolution réduite, la résolution étant réduite dans la totalité de la troisième image (10), et
- sélection et ensuite délivrance en sortie d'une zone centrale (12) et d'une deuxième zone extérieure latérale (14) dans une quatrième image (11) enregistrée par la suite de la séquence d'images, la résolution de la zone centrale (12) et de la deuxième zone extérieure latérale (14) n'étant pas réduite.

7. Procédé selon la revendication 6, une zone extérieure (15, 16) supérieure et/ou inférieure de la deuxième et/ou de la quatrième image (9, 11) n'étant pas sélectionnée et pas délivrée en sortie.

8. Procédé selon l'une des revendications 6 ou 7, la résolution dans la première image (8) et dans la troisième image (11) étant réduite par regroupement des pixels par classe au moyen du capteur d'enregistrement d'images de l'optronique (3) ou au moyen d'un dispositif de conditionnement d'images (4).

9. Élément de programme qui, lorsqu'il est exécuté sur un processeur, commande le processeur pour qu'il mette en œuvre les étapes de procédé d'un procédé selon l'une des revendications 6 à 8.

10. Support lisible par ordinateur, sur lequel est enregistré un élément de programme qui, lorsqu'il est exécuté sur un processeur, commande le processeur pour qu'il mette en œuvre les étapes de procédé d'un procédé selon l'une des revendications 6 à 8.
